# EUROPÄISCHE PATENTSCHRIFT

(11) **EP 2 426 028 B1**
(45) Veröffentlichungstag und Bekanntmachung des Hinweises auf die Patenterteilung: **22.03.2017**
(21) Anmeldenummer: 11007237.8
(22) Anmeldetag: 06.09.2011
(51) Int. Cl.: B62B 5/04

(54) **Bremsvorrichtung für einen Transportwagen**
Braking device for a transport vehicle
Dispositif de freinage pour un véhicule de transport

(30) Priorität: 07.09.2010 DE 202010012390 U
(43) Veröffentlichungstag der Anmeldung: 07.03.2012
(73) Patentinhaber: Cordes GmbH & Co. KG, 21698 Harsefeld (DE)
(72) Erfinder: Krüger, Udo, 21698 Harsefeld (DE)
(74) Vertreter: Philipp, Matthias

(56) Entgegenhaltungen:
- FR-A- 948 831
- FR-A1- 2 200 123
- GB-A- 320 750
- US-A- 3 556 260

## Beschreibung

Die Erfindung betrifft eine Bremsvorrichtung für einen Transportwagen.

Transportwagen mit mehreren Tragrollen oder -rädern, wie beispielsweise Transportwagen für Pakete, Einkaufswaren, Gepäck usw. müssen aus Bedienungs- und Sicherheitsgründen mit einer feststellbaren Bremse versehen sein, damit der Wagen auf geneigtem Untergrund, unter Windeinfluss usw. nicht unbeabsichtigt fortrollt.

Zu diesem Zweck sind bereits seit langem feststellbare Rollen bzw. Räder bekannt, die entweder schwenkbar in Form von Lenkrollen oder aber als nicht lenkbare Rollen ausgebildet sein können, und wobei an jeder feststellbaren Rolle ein fußbetätigter Feststellhebel vorgesehen ist, mit dem ein Bremsklotz gegen eine Laufoberfläche der Rolle anlegbar ist, wobei der Hebel durch wiederholte Betätigung oder Betätigung in umgekehrter Richtung ein Lösen der Bremse ermöglicht.

Die FR 2.200.123 A1 zeigt eine Bremsvorrichtung für einen Transportwagen mit einem linear verlagerbar geführten Bremselement zur reibschlüssigen Bremsung einer Tragrolle. Die Betätigung des Bremselements erfolgt über eine drehbar gelagerte Betätigungswelle.

Obwohl sich derartige Feststellbremsen in der Praxis an sich bewährt haben, ist ein grundsätzlicher Nachteil dieser Bauweise auf den Umstand zurückzuführen, dass für eine zuverlässige Arretierung eines drei- oder vierrädrigen, mit einer oder zwei Lenkrollen ausgestatteten Transportwagens meist zwei Rollen, in der Regel mindestens eine Lenkrolle, festgestellt werden müssen, was eine relativ umständliche Betätigung mit sich bringt, da zunächst einmal die jeweilige Lenkrolle in eine für eine Bremsbetätigung geeignete Schwenkstellung zu bringen ist, bevor die eigentliche Bremsbetätigung erfolgen kann.

Die Erfindung hat sich zur Aufgabe gestellt, eine Bremsvorrichtung zu schaffen, mit der die Möglichkeit besteht, eine Tragrolle eines Transportwagens oder mehrere gleichzeitig mit einer Bremskraft zu beaufschlagen bzw. zu blockieren, wobei die Bedienung einfach und benutzerfreundlich sein soll und nach Möglichkeit nur geringfügige konstruktive Änderungen an dem Transportwagen selbst erforderlich sein sollen.

Die Aufgabe der Erfindung wird durch eine Bremsvorrichtung für einen Transportwagen gemäß den Merkmalen von Anspruch 1 gelöst.

Die Verwendung eines einzigen Betätigungselements für eine oder mehrere Tragrollen, (jeweils) einer Kniehebelanordnung sowie eines Sicherungsmittels ermöglicht eine sehr gute Bremswirkung, leichte Betätigung, kleinen Betätigungsweg bzw. Betätigungswinkel, einfache Montage und Herstellung sowie Kompatibilität zu handelsüblichen Transportgeräterollen.

Es kann vorgesehen sein, dass mindestens eine Tragrolle als Lenkrolle ausgebildet und um eine vertikale Achse oder Lenkachse verschwenkbar ist.

Das Bremselement kann im Falle der Zuordnung zu einer Lenkrolle mit einer konusförmigen Wirkungsfläche versehen sein.

Es kann vorgesehen sein, dass ein zweiter Kniehebel einer jeden Kniehebelanordnung schwenkbar an jeweils einem Bremselement angelenkt ist.

Das Sicherungsmittel kann ein federkraftbeaufschlagtes Zugelement aufweisen, etwa einen gebogenen oder abgewinkelten Zugarm, der an einem mit der Betätigungswelle fest verbundenen Hebelarm angelenkt sein kann.

Vorteilhaft sieht die Erfindung vor, dass ein Abstand der Betätigungswelle von den Tragrollen einstellbar ist, um Fertigungstoleranzen auszugleichen, einen Verschleiß des Bremselements und/oder der Tragrolle zu kompensieren oder um einen Betätigungsweg oder -winkel des Bedienelements in einen bestimmten Bereich einstellen zu können.

Die Erfindung bezieht sich weiterhin auf einen Transportwagen mit drei oder vier Tragrollen, von denen mindestens eine als Lenkrolle ausgebildet sein kann, mit einer Bremsvorrichtung nach der Erfindung, deren Betätigungselement bzw. -welle an einem Gestell des Transportwagens gelagert ist.

Es kann vorgesehen sein, dass die Bremsvorrichtung auf eine oder zwei Lenkrollen wirkt.

Die Betätigungswelle kann an zwei Lagerelementen gelagert sein, die abstandsveränderlich bezüglich der betätigten Rollen an dem Gestell gehalten sind.

Weitere Vorteile und Merkmale der Erfindung ergeben sich aus der nachfolgenden Beschreibung eines Ausführungsbeispiels, wobei auf eine Zeichnung Bezug genommen ist, in der
Fig. 1 einen Transportwagen in einer schematischen perspektivischen Darstellung zeigt, der mit einer erfindungsgemäßen Bremsvorrichtung ausgestattet ist,
Fig. 2 einzelne Elemente der Bremsvorrichtung des Transportwagens nach Fig. 1 in einer isolierten perspektivischen Darstellung zeigt,
Fig. 3 eine schematische Draufsicht auf einen Teil des Transportwagens nach Fig. 1 mit Teilen der Bremsvorrichtung zeigt,
Fig. 4 eine schematische Querschnittsansicht in Lösestellung entsprechend Linien IV - IV in Fig. 3 zeigt,
Fig. 5 eine schematische Querschnittsansicht entsprechend Fig. 4 in Bremsstellung zeigt,
Fig. 6a eine Darstellung entsprechend Fig. 4 zeigt, wobei zusätzlich ein Betätigungspedal dargestellt ist,
Fig. 6b ein Arretierelement in Lösestellung zeigt,
Fig. 7a eine Darstellung entsprechend Fig. 6 zeigt, wobei zusätzlich ein Betätigungspedal dargestellt ist, und
Fig. 7b das Arretierelement in Bremsstellung zeigt.

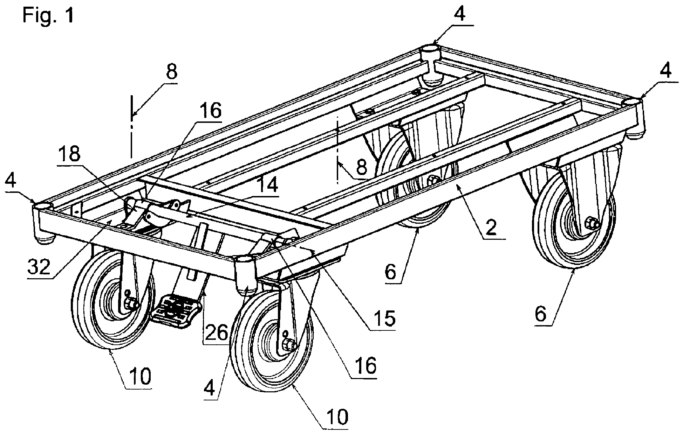

Fig. 1 zeigt eine perspektivische, schematische Darstellung eines rechteckigen Gestells 2 eines üblichen Transportwagens, an dessen Ecken in bekannter Weise Steckaufnahmen 4 zur formschlüssigen Aufnahme von Aufbauten unterschiedlichster Bauart angeordnet sind. Der Transportwagen bzw. das Gestell 2 weist zwei feststehende Tragrollen 6 und zwei um eine vertikale Lenkachse 8 schwenkbare, als Lenkrollen ausgebildete Tragrollen 10 auf.

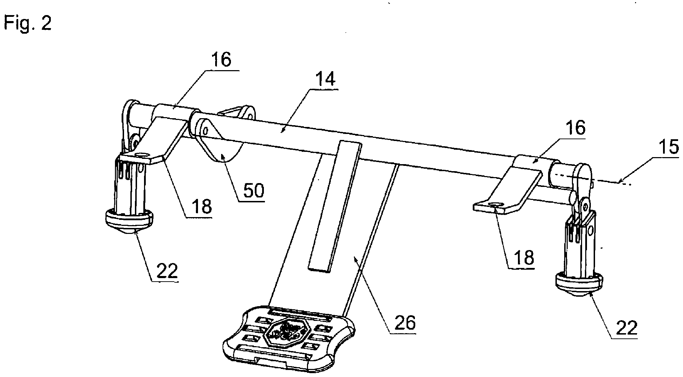

Erfindungsgemäß ist eine Bremsvorrichtung vorgesehen, deren grundsätzlicher Aufbau sich in Zusammenschau mit Fig. 2 ergibt. Ein Betätigungselement in Form einer Betätigungswelle 14 ist um eine Längsachse (Betätigungsachse) 15 drehbar an dem Gestell 2 gehalten, indem sie im Bereich ihrer beiderseitigen Enden in zwei zylindrischen Lagerhülsen 16 aufgenommen ist, die ihrerseits mittels an den Lagerhülsen 16 befestigter Streben 18 an das Gestell 2 geschraubt sind. An den Enden der Betätigungswelle 14 ist jeweils eine Kniehebelanordnung 20 vorgesehen, die zur Betätigung jeweils eines Bremselements 22 dient, welches in je einer vertikalen Führungshülse 23 geführt ist und durch die Kniehebelanordnung 20 in vertikaler Richtung 24 gegen eine jeweilige Lenkrolle 10 oder davon weg bewegt werden kann. Alternativ kann nur eine Kniehebelanordnung 20 vorgesehen sein, da der Wagen auch bei Blockierung nur einer Lenkrolle an einem Wegrollen gehindert ist. Zur bequemen Betätigung der Betätigungswelle 14 ist an dieser ein Betätigungspedal 26 drehfest angebracht, das eine Bedienungsperson mit dem Fuß betätigen kann.

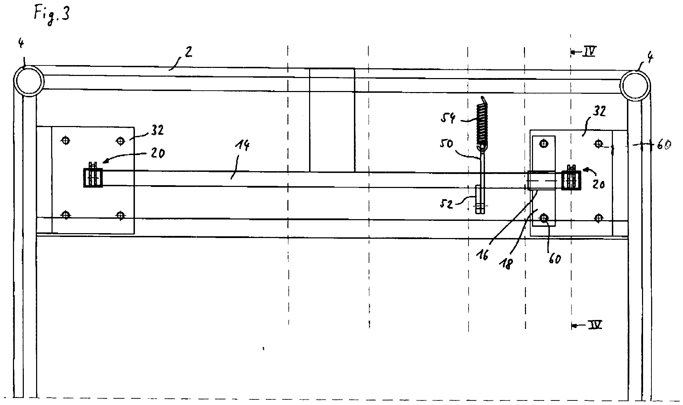

Fig. 3 erläutert die Anordnung in einer Draufsicht, in der ein Teil des Gestells 2, die Betätigungswelle 14 sowie eine Lagerhülse 16 mit Streben 18 dargestellt ist. Die Streben 18 sind mittels Befestigungsschrauben in Form von Stehbolzen 60, deren Funktion weiter unten noch erläutert wird, an einer Aufnahmeplatte 32 gehalten, die ihrerseits fest mit dem Gestell 2 verbunden ist bzw. einen Teil davon bildet.

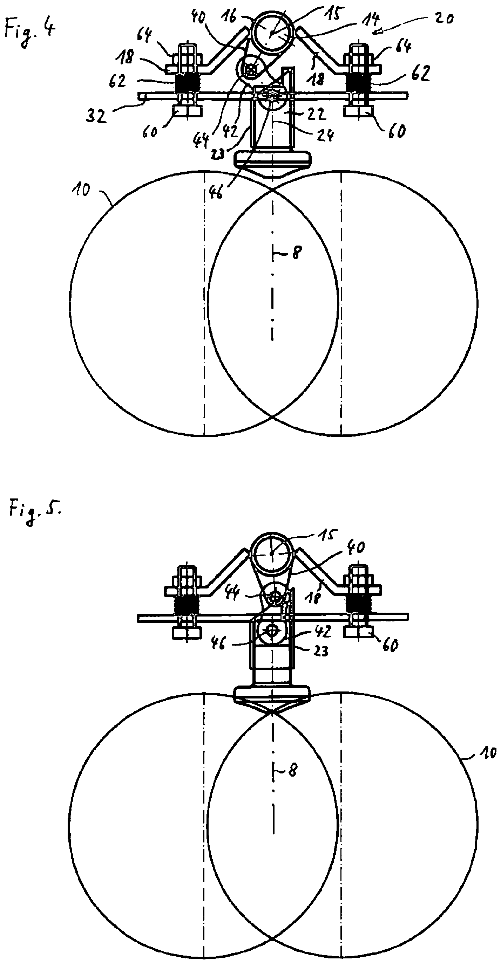

Fig. 4 bis 7 erläutern Aufbau und Funktion der Bremsvorrichtung in weiteren Einzelheiten.

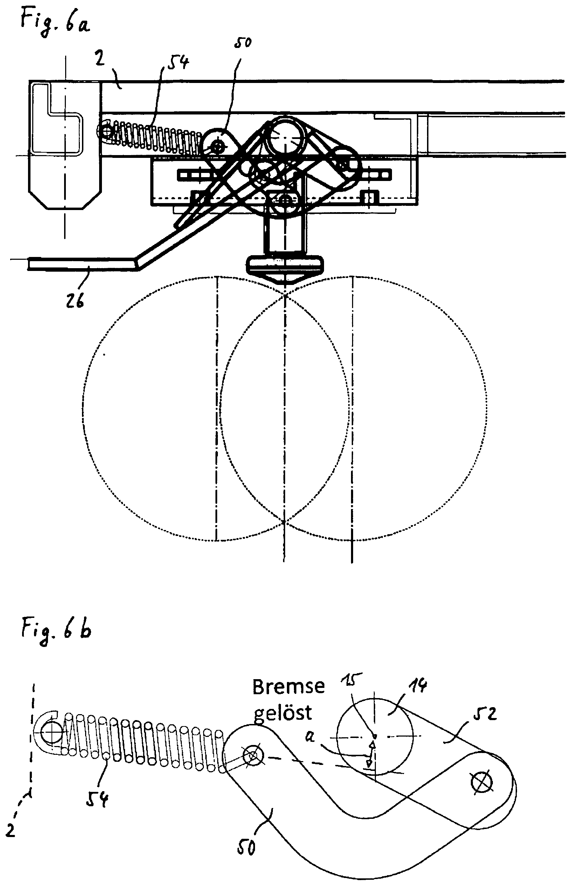

Fig. 4 und 6a zeigen schematische Querschnittsansichten, wobei im Wesentlichen eine Kniehebelanordnung mit zugeordnetem Bremselement sowie die Befestigung am Gestell dargestellt sind. Die Schwenkrolle 10 ist schematisch an ihren extremen Schwenkpositionen um die Lenkachse 8 dargestellt. Jede Kniehebelanordnung 20 besteht aus einem ersten Kniehebel 40, der drehfest mit der Betätigungswelle 14 verbunden ist, und einem zweiten Kniehebel 42, der an einer von der Betätigungsachse 15 beabstandeten Kniehebelachse 44 schwenkbar mit dem ersten Kniehebel 40 gekoppelt ist. Der zweite Kniehebel 42 ist seinerseits an seinem der Kniehebelachse 44 abgekehrten Ende an einer Anlenkachse 46 schwenkbar an dem Bremselement 22 angelenkt. Die Anordnung ist so, dass in einer gestreckten Kniehebelstellung, in der die Betätigungsachse 15, die Kniehebelachse 44 und die Anlenkachse 46 miteinander fluchten oder in einer insbesondere vertikalen Ebene liegen, das Bremselement 22 einen maximalen Abstand von der Betätigungsachse 15 bzw. der Betätigungswelle 14 einnimmt. Weiterhin ist eine Lösestellung gemäß Fig. 4 möglich, in der die Betätigungswelle 14 ausgehend von der gestreckten Kniehebelstellung um einen bestimmten Winkel, beispielsweise im Bereich von 10° bis 45°, gedreht ist, wobei das Bremselement 22 einen kleineren Abstand von der Betätigungsachse 15 oder der Betätigungswelle 14 aufweist als in der gestreckten Kniehebelstellung.

Schließlich können die Kniehebelanordnungen, wie Fig. 5 zeigt, in eine Bremsstellung gebracht werden, in der sie ausgehend von der Lösestellung nach Fig. 4 über die gestreckte Kniehebelstellung hinaus bewegt sind, so dass sich die Kniehebelachse 44 jenseits einer die Betätigungsachse 15 und die Anlenkachse 46 enthaltenden (vertikalen) Ebene befindet. Der gesamte Verdrehwinkel der Betätigungswelle zwischen Löse- und Bremsstellung beträgt bevorzugt zwischen 25° und 60°, insbesondere zwischen 30° und 45° und insbesondere weniger als 45°, etwa zwischen 30° und 40°.

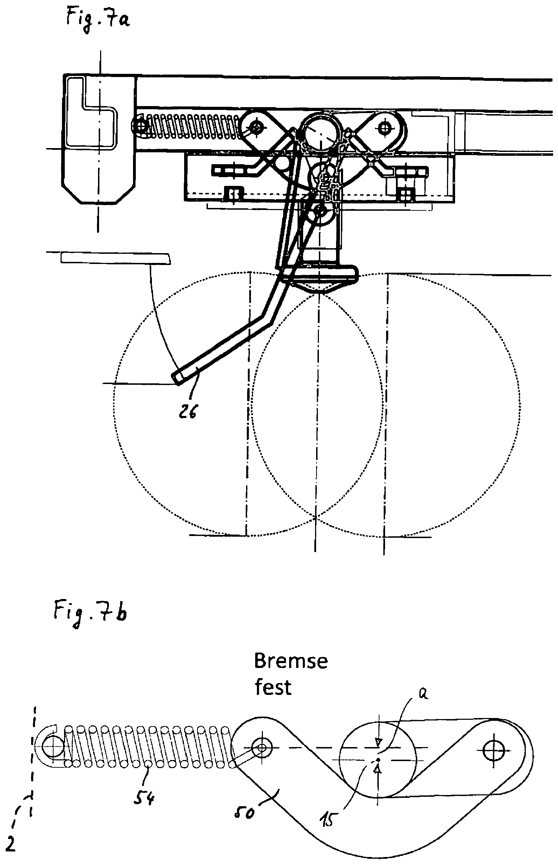

Um ein selbsttätiges Bewegen in die und Halten der Bremsvorrichtung in der Lösestellung gemäß Fig. 4 und ein sicheres Halten der Bremsvorrichtung in der Bremsstellung nach Fig. 5 zu gewährleisten, ist ein Sicherungsmittel 50, 52, 54 vorgesehen, dessen Aufbau und Wirkungsweise sich aus Fig. 6a, b und 7a, b ergibt.

Fig. 6a zeigt eine Ansicht ähnlich wie Fig. 4, wobei zusätzlich zu der Kniehebelanordnung mit Betätigungswelle und Bremselement noch das Betätigungspedal 26 und ein Sicherungsmittel dargestellt ist, das in der hier erläuterten Ausführung einen abwinkelten Zugarm 50 aufweist, der an einem Ende gelenkig an einem fest mit der Betätigungswelle 14 verbundenen Hebelarm 52 angelenkt ist und an seinem anderen Ende mit einer Zugfeder 54 verbunden ist, die ihrerseits am Gestell 2 gehalten ist. Aufgrund der abgewinkelten oder gebogenen Form des Zugarms 50 wird eine Zugkraft der vorgespannten Feder 54 auf den Hebelarm 52 und damit auf eine von der Zugfeder 54 abgekehrte Seite der Betätigungswelle übertragen, so dass ein in Fig. 6a, b im Uhrzeigersinn wirkendes Drehmoment an der Betätigungswelle 14 erzeugt wird, welches die Bremsvorrichtung in der dargestellten Lösestellung hält. Sowohl das Bremselement 22 als auch das Betätigungspedal 26 werden durch die Zugkraft der Feder 54 in der dargestellten angehobenen Stellung (Lösestellung) gehalten.

Fig. 7a zeigt eine Darstellung analog zu Fig. 6a, wobei sich die Bremsvorrichtung in Bremsstellung befindet. Aufgrund der Verdrehung der Betätigungswelle 14 im Gegenuhrzeigersinn ist der Hebelarm 52 ausgehend von seiner schräg abwärts weisenden Position (in Lösestellung, Fig. 6a) in eine leicht nach oben weisende Position verschwenkt worden, so dass nunmehr die Zugkraft der Feder 54 über den abgewinkelten Zugarm 50 nicht mehr im Uhrzeigersinn, sondern im Gegenuhrzeigersinn auf die Betätigungswelle 14 wirkt und ein entsprechendes Drehmoment bewirkt, welches die Bremsvorrichtung in der Bremsstellung hält, zusätzlich zu der ohnehin durch die Kniehebelanordnungen und die Elastizität der Rollen erzeugten Haltewirkung.

Durch geeignete Anordnung des Hebelarms 52 in einem bestimmten Winkel bezüglich des ersten Kniehebels 40 kann konstruktiv festgelegt werden, wie groß das in Löse- und Bremsstellung von der Feder 54 erzeugte Drehmoment an der Betätigungswelle 14 sein soll, in Funktion des Abstands der Wirkungslinie der Federkraft von der Betätigungsachse 15 (in Fig. 6b, 7b mit a angegeben), insbesondere ob es in Lösestellung größer sein soll als in Bremsstellung (wie in Fig. 4 bis 7 dargestellt), oder ob es in beiden Positionen näherungsweise gleich groß sein soll oder aber umgekehrt in der Bremsstellung größer als in der Lösestellung.

Wie Fig. 4 und 5 erkennen lassen, sind die Lagerhülsen 16, in denen die Betätigungswelle 14 drehbar gelagert ist, nicht starr an der Aufnahmeplatte 32 des Gestells 2 fixiert, sondern in vertikaler Richtung einstellbar. Dies ist dadurch realisiert, dass Stehbolzen 60 in die jeweilige Aufnahmeplatte 32 geschraubt sind, auf deren über die Aufnahmeplatte nach oben vorstehenden Bolzen- bzw. Gewindeabschnitt zunächst eine Druckfeder 62, darauf die Strebe 18 und zuletzt eine Befestigungsmutter 64 aufgesetzt bzw. aufgeschraubt sind, so dass sich der Abstand der Streben 18 von der Aufnahmeplatte 32 durch Verdrehen der Befestigungsmuttern 64 einstellen lässt. Die Führungshülse 23 ist auf einer Seite, die der Bremsstellung der Kniehebelanordnung entspricht, höher bzw. länger als auf der gegenüberliegenden, der Lösestellung entsprechenden Seite, so dass in Bremsstellung ein Anschlag für den ersten und/oder zweiten Kniehebel gebildet ist, der unabhängig von einer geringfügigen Höhenverstellung der Betätigungswelle 14 ist.

### BEZUGSZEICHENLISTE

- 2: Gestell
- 4: Steckaufnahme
- 6: Tragrolle (feststehend)
- 8: Lenkachse
- 10: Tragrolle (Lenkrolle)
- 14: Betätigungselement (Betätigungswelle)
- 15: Betätigungsachse
- 16: Lagerhülse (Lagerelement)
- 18: Strebe
- 20: Kniehebelanordnung
- 22: Bremselement
- 23: Führungshülse
- 24: vertikale Richtung
- 26: Betätigungspedal (Bedienelement)
- 32: Aufnahmeplatte
- 40: erster Kniehebel
- 42: zweiter Kniehebel
- 44: Kniehebelachse
- 46: Anlenkachse
- 50: Zugarm
- 52: Hebelarm
- 54: Zugfeder
- 60: Stehbolzen
- 62: Druckfeder
- 64: Befestigungsmutter

## Patentansprüche

1. Bremsvorrichtung für einen Transportwagen mit mehreren Tragrollen (6, 10) zur Bremsbeaufschlagung von mindestens einer Tragrolle (10), der ein zwischen einer Lösestellung und einer Bremsstellung bewegbares, linear verlagerbar geführtes und in der Bremsstellung mit der Tragrolle (10) reibschlüssig zusammenwirkendes Bremselement (22) zugeordnet ist, mit einem Betätigungselement (14), das über mindestens eine Kniehebelanordnung (20), die zwei gelenkig gelagerte Kniehebel (40, 42) aufweist, mit mindestens einem Bremselement (22) in Betätigungsverbindung besteht, wobei das Betätigungselement eine drehbar gelagerte Betätigungswelle (14) ist, auf der jeweils ein erster Kniehebel (40) der mindestens einen Kniehebelanordnung (20) und ein Betätigungshebel oder Betätigungspedal (26) drehfest gehalten sind, und mit einem Sicherungsmittel (50, 52, 54), das außerhalb einer gestreckten Kniehebelstellung eine Sicherungswirkung in Richtung einer zunächst benachbarten Endstellung, Löse- oder Bremsstellung, auf die mindestens eine Kniehebelanordnung (20) ausübt.

2. Bremsvorrichtung nach Anspruch 1, **dadurch gekennzeichnet, dass** mindestens eine Tragrolle (10) als Lenkrolle ausgebildet und um eine vertikale Achse (8) verschwenkbar ist.

3. Bremsvorrichtung nach einem der vorangehenden Ansprüche, **dadurch gekennzeichnet, dass** ein zweiter Kniehebel (42) einer jeden Kniehebelanordnung (20) schwenkbar an jeweils einem Bremselement (22) angelenkt ist.

4. Bremsvorrichtung nach einem der vorangehenden Ansprüche, **dadurch gekennzeichnet, dass** das Sicherungsmittel (50, 52, 54) ein federkraftbeaufschlagtes Zugelement aufweist, etwa einen gebogenen oder abgewinkelten Zugarm, der an einem mit der Betätigungswelle (14) fest verbundenen Hebelarm (52) angelenkt ist.

5. Bremsvorrichtung nach einem der vorangehenden Ansprüche, **dadurch gekennzeichnet, dass** ein Abstand der Betätigungswelle (14) von den Tragrollen (10) einstellbar ist.

6. Transportwagen mit drei oder vier Tragrollen (6, 10), von denen mindestens eine als Lenkrolle ausgebildet sein kann, mit einer Bremsvorrichtung nach einem der vorangehenden Ansprüche, deren Betätigungselement (14) an einem Gestell (2) des Transportwagens gelagert ist.

7. Transportwagen nach Anspruch 6, **dadurch gekennzeichnet, dass** die Bremsvorrichtung auf eine oder zwei Lenkrollen (10) wirkt.

8. Transportwagen nach Anspruch 6 oder 7, **dadurch gekennzeichnet, dass** die Betätigungswelle an zwei Lagerelementen (16) gelagert ist, die abstandsveränderlich bezüglich der betätigten Tragrollen (10) an dem Gestell (2) gehalten sind.

## Claims

1. Braking device for a transport vehicle with several carrying rollers (6, 10), for exerting a braking action on at least one carrying roller (10), assigned to which is a braking element (22) which can be moved between a released position and a braking position and which is held such that it can be displaced in a linear manner, and which in the braking position acts together with the carrying roller (10) through frictional engagement,
with an actuation element (14) which is in actuation connection with at least one braking element (22) via at least one toggle joint arrangement (20) which has two toggle joints (40, 42) that are borne in an articulated manner,
wherein the actuation element is a pivoted actuating shaft (14) on which a first toggle lever (40) of the at least one toggle joint arrangement (20) and an actuating lever or actuating pedal (26) are respectively held in a non-rotating manner,
and with a securing element (50, 62, 54) which, outside of an extended toggle lever position, exerts a securing action on the at least one toggle joint arrangement (20), in the direction of an initially adjacent end position, release position or braking position.

2. Braking device according to claim 1, **characterised in that** at least one carrying roller (10) is designed as a steering roller and can be pivoted around a vertical axis (8).

3. Braking device according to one of the preceding claims, **characterised in that** a second toggle lever (42) of each toggle joint arrangement (20) is articulated in a pivoting manner on one braking element (22) in each case.

4. Braking device according to one of the preceding claims, **characterised in that** the securing element (50, 52, 54) has a spring-loaded traction element, for example a curved or angled pulling arm, which is articulated on a lever arm (52) that is firmly connected to the actuating shaft (14).

5. Braking device according to one of the preceding claims, **characterised in that** a distance between the actuating shaft (14) and the carrying rollers (10) can be adjusted.

6. Transport vehicle with three or four carrying rollers (6, 10), of which at least one can be designed as a steering roller, with a braking device according to one of the preceding claims, the actuation element (14) of which is borne on a frame (2) of the transport vehicle.

7. Transport vehicle according to claim 6, **characterised in that** the braking device acts on one or two steering rollers (10).

8. Transport vehicle according to claim 6 or 7, **characterised in that** the actuating shaft is borne on two bearing elements (16) which are held on the frame (2) such that the distance in relation to the actuated carrying rollers (10) can be varied.

## Revendications

1. Dispositif de freinage pour un véhicule de transport doté de plusieurs roues portantes (6, 10), servant à exercer un effet de freinage sur au moins une roue portante (10) à laquelle est affecté un élément de freinage (22) capable d'être déplacé entre une position de libération et une position de freinage et qui est tenu de manière à pouvoir être déplacé linéairement et qui, en position de freinage, agit sur la roue portante (10) par friction,
comportant un élément de mise en oeuvre (14) qui est raccordé avec au moins un élément de freinage (22) par l'intermédiaire d'au moins une articulation (20) comportant deux genouillères (40, 42) qui sont portées de manière articulée,
**caractérisé en ce que** l'élément de mise en oeuvre est un arbre de mise en oeuvre pivotant (14) sur lequel un premier levier articulé (40) de l'articulation (20) prévue en au moins un exemplaire, ainsi qu'un levier de mise en oeuvre ou une pédale de mise en oeuvre (26) sont respectivement tenus de manière non rotationnelle,
et comportant un élément d'attache (50, 52, 54) qui, en dehors d'une position étendue de levier articulé, exerce un effet d'attache sur l'articulation (20) prévue en au moins un exemplaire, dans le sens d'une position d'extrémité, d'une position de libération ou d'une position de freinage initialement adjacente.

2. Dispositif de freinage selon la revendication 1, **caractérisé en ce qu'**au moins une roue portante (10) est conçue comme roue de direction et peut pivoter autour d'un axe vertical (8).

3. Dispositif de freinage selon l'une quelconque des revendications précédentes, **caractérisé en ce qu'**un deuxième levier articulé (42) de chaque articulation (20) peut pivoter sur un élément de freinage (22) dans chaque cas.

4. Dispositif de freinage selon l'une quelconque des revendications précédentes, **caractérisé en ce que** l'élément d'attache (50, 52, 54) comprend un élément de traction à ressort, par exemple un bras de traction recourbé ou disposé à un angle, qui est articulé sur un bras de levier (52) qui, lui, est solidement raccordé à l'arbre de mise en oeuvre (14).

5. Dispositif de freinage selon l'une quelconque des revendications précédentes, **caractérisé en ce que** la distance entre l'arbre de mise en oeuvre (14) et les roues portantes (10) peut être ajustée.

6. Véhicule de transport muni de trois ou quatre roues portantes (6, 10) dont une roue au moins peut être désignée comme roue de direction, et aussi d'un dispositif de freinage selon l'une quelconque des revendications précédentes, dont l'élément de mise en oeuvre (14) est porté sur un bâti (2) du véhicule de transport.

7. Véhicule de transport selon la revendication 6, **caractérisé en ce que** le dispositif de freinage agit sur une ou deux roues de direction (10).

8. Véhicule de transport selon la revendication 6 ou 7, **caractérisé en ce que** l'arbre de mise en oeuvre est porté sur deux éléments de support (16) qui sont tenus sur le bâti (2) de manière à ce que la distance par rapport aux roues portantes (10) mises en oeuvre puisse être variée.
